# DEMANDE DE BREVET EUROPEEN

(11) **EP 0 823 407 A2**
(43) Date de publication de la demande: **11.02.1998**
(21) Numéro de dépôt: 97401838.4
(22) Date de dépôt: 31.07.1997
(51) Int. Cl.: C03C 17/36, C03C 17/34

(54) **Substrat verrier muni d'une couche réfléchissante**

(30) Priorité: 07.08.1996 FR 9609945
(71) Demandeur: SAINT-GOBAIN VITRAGE, 92400 Courbevoie (FR)
(72) Inventeur: Joret, Laurent, 75011 Paris (FR)
(74) Mandataire: Renous Chan, Véronique

(57) **Abrégé**

L'invention a pour objet un substrat verrier (1) muni d'une couche (3) réfléchissante au moins dans les longueurs d'onde appartenant au domaine du visible, couche déposée à chaud, notamment en continu sur un ruban de verre float dont est issu ledit substrat (1). La couche (3) réfléchissante est à base d'un matériau « à caractère métallique» et/ou à base d'un matériau « à caractère semi-conducteur ». Le substrat (1) est également muni d'un couche complémentaire « externe » (4) et/ou d'une couche complémentaire interne (2) par rapport à ladite couche réfléchissante (3) et destinée(s) à assurer sa durabilité chimique et/ou mécanique.

L'invention concerne également le procédé de fabrication du substrat ainsi revêtu et ses applications.

## Description

L'invention concerne les substrats verriers munis d'une couche réfléchissante au moins dans le domaine du visible, en particulier ceux dont la couche réfléchissante est déposée à chaud, plus particulièrement en continu à la surface d'un ruban de verre d'une installation float.

Suivant son épaisseur, une couche réfléchissante peut en effet conférer à un substrat verrier destiné à devenir un vitrage différentes propriétés : à relativement faible épaisseur, elle joue le rôle d'un revêtement de protection contre le rayonnement solaire et/ou bas-émissif. Avec une épaisseur plus importante, elle permet d'obtenir un véritable miroir à très forte réflexion lumineuse.

L'exemple le plus répandu est l'argent : on sait le déposer en couche mince, notamment d'épaisseur interférentielle, par des techniques sous vide du type pulvérisation cathodique, ou en couche plus épaisse pour faire des miroirs, par exemple par la technique classique par voie humide d'une ligne d'argenture. Cependant, l'argent est un matériau de durabilité limitée en couche mince quand il est exposé à un milieu agressif sur le plan chimique, et les techniques de dépôt évoquées plus haut ne s'effectuent qu'en reprise, et en discontinu, sur des plateaux de verre une fois découpés à partir du ruban de verre issu d'une ligne de production float.

II était donc intéressant de se pencher sur d'autres matériaux à propriétés identiques ou analogues à l'argent mais que l'on pourrait parvenir à déposer à moindre coût en continu, directement sur le ruban de verre d'une ligne float, et présentant une durabilité supérieure.

Des brevets FR-2 011 562 et FR-2 083 818, il est ainsi connu de déposer une couche d'aluminium sur un ruban de verre, quand il se trouve dans l'enceinte même du bain float, par évaporation, à partir d'une masse de métal fondue émettant des vapeurs d'aluminium en direction du verre, vapeurs se condensant à la surface du ruban de verre pour y laisser un revêtement continu.

Du brevet GB-A-2 248 853, il est également connu de déposer des couches de métal sur un ruban de verre float, à une température d'au moins 100°C. Ici, il s'agit d'une technique de pyrolyse en phase liquide, où des composés organométalliques dans un solvant sont projetés en direction du verre et s'y décomposent à son contact en métal élémentaire.

De la demande de brevet PCT/FR96/00362 déposée le 7 mars 1996 et la demande de brevet PCT/FR97/00394 du 6 mars 1997, il a été mis au point un procédé de dépôt de couche réfléchissante du type métal en continu sur le ruban de verre float, à chaud, autorisant des vitesses de dépôt supérieures à celles que l'on peut obtenir par évaporation de vapeurs métalliques. Ce procédé consiste à effectuer le dépôt en atmosphère contrôlée, inerte ou réductrice, quand le ruban de verre a déjà acquis cette stabilité dimensionnelle, en mettant en contact la surface du ruban avec le métal en question sous forme pulvérulente ou sous forme fondue, la température du ruban lors de la mise en contact étant choisie afin que la poudre fonde et coalesce, ou que le métal fondu se nappe, à la surface du ruban, laissant une couche continue solide quand la température du ruban diminue lors du procédé de formage du verre plat jusqu'à une température inférieure ou égale à la température de fusion du métal.

La poudre du métal ainsi déposée sur le verre peut en particulier provenir de la décomposition d'un composé chimique à une certaine distance de la surface à recouvrir, le procédé étant alors caractérisé par la présence de la poudre métallique « libre » sur la distance séparant la zone où la réaction de formation de la poudre se produit et la surface du verre à revêtir. On désigne ce type de procédé sous l'appellation de procédé par « DPM » (« Deposited Powder Melting »).

Enfin, de la demande de brevet EP-A-0 583 871, il est connu de déposer des couches de silicium réfléchissantes sur des rubans de verre float par une technique de pyrolyse en phase gazeuse appelée également CVD (Chemical Vapor Deposition). Afin d'obtenir un effet miroir, le silicium étant par nature un matériau moins réfléchissant qu'un véritable métal, il est nécessaire, selon ce document, d'associer à la couche de silicium deux couches superposées, l'une à faible indice de réfraction, l'autre à fort indice de réfraction. Elles sont destinées à amplifier optiquement la réflexion lumineuse qui serait obtenue par la couche de silicium seule.

Le but de l'invention est de mettre au point un nouveau type de substrat verrier à couche à propriété réfléchissante, dont la fabrication puisse être réalisée à chaud, en continu, notamment sur un ruban de verre float, et qui présente en outre une durabilité mécanique et chimique accrue.

L'invention a pour objet un substrat verrier muni d'une couche réfléchissante au moins dans les longueurs d'onde appartenant au domaine du visible, couche déposée à chaud, notamment en continu sur un ruban de verre float dont est issu ledit substrat. La couche réfléchissante est à base d'un matériau « à caractère métallique » et/ou à base d'un matériau « à caractère semi-conducteur ».

Dans le contexte de l'invention, on comprend par dépôt « à chaud » un dépôt à une température d'au moins 350 à 400°C, notamment d'environ 450 à 750°C, soit les températures rencontrées sur une ligne float.

Dans le contexte de l'invention également, on comprend par « matériau à caractère métallique» tout matériau à comportement électrique du type conducteur, et que l'on peut caractériser comme possédant une longueur d'onde plasma, notamment dans l'ultraviolet et l'infrarouge. De même, on comprend au sens de l'invention par « matériau à caractère semi-conducteur » tout matériau à comportement électrique du type semi-conducteur, que l'on peut caractériser comme ayant une énergie (E_{gap}) séparant sa bande de valence de sa bande de conduction, valeur d'énergie E_{gap} éventuellement inférieure à l'énergie lumineuse dans le rouge (hν_{rouge}).

Toujours selon l'invention, on associe à cette couche réfléchissante une couche complémentaire interne et/ou une couche complémentaire externe destinées à assurer sa durabilité chimique et/ou mécanique. On comprend par couche « interne » une couche qui se trouve entre le substrat verrier porteur et la couche réfléchissante, et par couche « externe » une couche déposée au-dessus de ladite couche réfléchissante.

Ces couches complémentaires permettent de préserver la couche réfléchissante vis-à-vis de différents types d'agressions et à différents stades de sa fabrication.

En effet, puisque la couche réfléchissante est déposée à température élevée, elle va se trouver soumise au risque que des éléments du verre viennent migrer à sa surface et la dégrader lors de sa fabrication même, ce qui peut être le cas de l'oxygène ou d'ions alcalins du type Na⁺. En outre, peuvent par ailleurs se poser des problèmes d'affinité chimique couche/substrat. L'utilisation d'une couche « interne » permet de parer à ces deux difficultés, en offrant la possibilité « d'isoler » chimiquement la couche réfléchissante de la surface du verre 1 et éventuellement d'en promouvoir l'adhérence au verre.

Par ailleurs, même si le dépôt de la couche réfléchissante s'effectue dans une atmosphère relativement réductrice et non oxydante, ce qui est le cas d'un dépôt effectué dans l'enceinte d'un bain float à atmosphère H₂/N₂, la couche est ensuite soumise, lorsque le ruban de verre float quitte l'enceinte, à une atmosphère ambiante, donc oxydante alors que le ruban de verre est encore à des températures décroissant progressivement à partir d'environ 590°C, donc toujours des températures relativement élevées. La couche, qui est à ces températures, court ainsi le risque de s'oxyder à ce moment-là. La façon la plus efficace d'écarter ce risque est de recouvrir la couche réfléchissante d'une couche externe, si possible avant même que la couche réfléchissante puisse être en contact avec une atmosphère oxydante. La couche externe, comme la couche interne précédemment, permet d'isoler chimiquement la couche réfléchissante du milieu extérieur.

Le substrat verrier, une fois revêtu de l'ensemble des couches peut avoir à subir des traitements impliquant un réchauffage et/ou des traitements modifiant son état de contrainte mécanique, comme c'est le cas notamment d'un traitement du type recuit, bombage ou trempe. La présence des couches complémentaires permet de protéger là encore la couche réfléchissante de l'oxydation et de la migration d'éléments provenant du verre susceptibles de la dégrader et la présence de la couche complémentaire « interne » peut aussi contribuer à réduire l'état de contrainte dans la couche réfléchissante, plus particulièrement au cours d'un traitement thermique post-dépôt du type trempe.

En outre, « à froid », c'est-à-dire une fois la fabrication du substrat verrier à couches terminée, les couches complémentaires continuent de protéger la couche réfléchissante de l'oxydation à l'atmosphère ambiante, phénomène certes beaucoup plus lent qu'à haute température mais non négligeable si l'on envisage des durées d'utilisation du substrat d'au moins 10 à 20 ans. Elles la protègent également des attaques corrosives qui peuvent avoir diverses origines : elles peuvent provenir de la présence de gaz polluants dans l'atmosphère ambiante, du type gaz soufrés ou chlorés ou du contact avec des produits de nettoyage liquides. La couche « externe » isole également la couche réfléchissante de l'humidité, sous forme d'eau liquide ou d'eau vapeur. La couche « externe », quand elle est choisie de dureté suffisante, peut aussi conférer à la couche réfléchissante des propriétés anti-rayures, et de résistance à l'abrasion mécanique ou général.

Avantageusement, la couche réfléchissante selon l'invention est choisie à base d'au moins un métal ou d'au moins un nitrure métallique.

En effet, pour le physicien du solide, un métal est un matériau qui possède une longueur d'onde plasma, ce n'est pas le cas du silicium. En revanche, certains composés qui ne figurent pas à titre d'éléments dans la table de Mendeleiev peuvent présenter une longueur d'onde plasma, notamment dans l'ultraviolet, et présenter ainsi tous les caractères d'un métal. C'est le cas de certains nitrures. Il peut ainsi s'agir d'un métal ou d'un alliage métallique à base d'argent Ag, de zinc Zn, d'étain Sn, d'aluminium Al, d'or, Au, d'indium In, de rhodium Rh, de chrome Cr, de cadmium Cd. Il peut aussi s'agir de nitrures tels que le nitrure de titane TiN, le nitrure de zirconium ZrN, le nitrure d'hafnium HfN.

Les couches à base d'AI, Zn et Cd sont de préférence déposées par la technique de dépôt en poudre ou en phase liquide telle que décrite dans la demande PCT/FR96/00362 précitée. Les couches à base d'Ag et d'Au peuvent être déposées par la technique d'évaporation également pré-mentionnée. les couches à base de Cr, TiN, ZrN, HfN et Rh peuvent quant à elles être déposées par pyrolyse en phase gazeuse CVD, pour Cr à partir de précurseurs du type CrCl₂ ou alkyls de chrome, pour les nitrures à partir de précurseurs d'azote tel que l'ammoniac ou une amine et de précurseurs de métal tels que des halogénures. Ainsi, pour fabriquer du TiN, comme décrit dans la demande EP-0 638 527, les précurseurs de départ sont du TiCl₄ et un mélange d'ammoniac et de N-méthylamine.

Pour fabriquer du ZrN, on peut également utiliser une technique de CVD voisine de celle exposée dans la demande européenne précitée, avec au moins un précurseur de zirconium et un précurseur azoté sous forme d'amine. Le précurseur de zirconium choisi peut avoir avantageusement pour formule chimique ZrRₐX_{b} dans laquelle R et X désignent respectivement un radical alkyl ou cyclique ayant 1 à 6 atomes de carbone et un halogène, la somme de a et b étant égale à 4, avec a et b supérieurs ou égaux à 0. De préférence, il s'agit du tétrachlorure de zirconium ZrCl₄. Avantageusement, l'amine choisie comprend au plus une liaison N-H. Ainsi, il peut s'agir d'une amine secondaire ou tertiaire, notamment à radicaux alkyls ayant de 1 à 5 atomes de carbone chacun, ramifiés ou linéaires, éventuellement présentant des liaisons insaturées éthyléniques. L'amine peut être comprise dans un cycle aromatique ou non, telle que la pyrédine ou la pipéridine. Il peut également s'agir de la diméthylamine (CH₃)₂ NH, de la diéthylamine, de la diterbutylamine. L'amine utilisée peut être également une amine primaire. La couche de nitrure de zirconium ainsi obtenue est généralement au moins partiellement cristallisée sous forme ZrN, c'est-à-dire la forme du nitrure qui a des propriétés de réflexion et du conduction électrique.

On peut aussi déposer des couches d'aluminium par CVD, notamment en utilisant comme gaz précurseurs tous les alkyls d'aluminium et les alanes complexés par l'ammoniac ou une amine, par exemple Al(CH₃)₃, Al(C₂H₅)₃, AlH₃(NH₃), AlH₃ (N-Et Me₂).

L'épaisseur de la couche réfléchissante est choisie en fonction de l'application du substrat verrier envisagée. Si l'on souhaite l'utiliser en tant que miroir, elle doit être suffisamment épaisse pour qu'à elle seule elle permette d'augmenter la réflexion lumineuse du substrat verrier jusqu'à des valeurs supérieures à 70%, et même plutôt supérieures à 80 et même 90%. Pour cela, son épaisseur géométrique est alors généralement choisie supérieure ou égale à 40 nm, et de préférence supérieure ou égale à 50 nm. En général, son épaisseur géométrique est comprise entre 50 et 80 nm. Des épaisseurs trop importantes n'apportent en effet rien de plus du point de vue de la réflexion lumineuse, elles nécessitent simplement une durée de dépôt plus longue et plus coûteuse.

Les miroirs ainsi constitués peuvent être utilisés en « face 1 », c'est-à-dire être disposés de façon telle que la couche réfléchissante se trouve du côté du substrat verrier où se trouve l'observateur. Ils peuvent aussi être utilisés en « face 2 », c'est-à-dire être disposés de façon que la couche réfléchissante se trouve du côté opposé à celui où se trouve l'observateur. Dans ce second cas de figure, on peut prévoir de recouvrir l'empilement de couches d'un revêtement protecteur et/ou opacifiant, notamment du type couche d'émail ou laque à base de polymère(s). On peut aussi avoir recours à un revêtement protecteur qui soit transparent, sous la forme d'une laque ou d'un film de polymère transparent.

Si l'on envisage d'utiliser le substrat à couche réfléchissante en tant que vitrage autorisant la vision, par exemple présentant des valeurs de transmission lumineuse de l'ordre de 10 à 40%, et notamment en vue d'obtenir une fonction de protection solaire, la couche réfléchissante est plus mince. On la choisit de préférence d'une épaisseur géométrique inférieure à 50 nm, notamment inférieure à 40 nm, par exemple comprise entre 5 et 35 nm.

Concernant la nature des matériaux constitutifs des couches complémentaires « externe » et « interne », ceux-ci sont choisis de manière à « interférer » optiquement le moins possible avec la couche réfléchissante.

De préférence, ils sont donc choisis à base de matériau ou de mélange de matériau(x) transparent(s) dans les longueurs d'onde appartenant au domaine du visible.

Ils peuvent être ainsi à base d'oxyde(s), oxycarbure(s) ou oxynitrure(s) des éléments du groupe 2a, 3b, 4b, 3a, 4a et des lanthanides du tableau de classement périodique de Mendeleief, notamment les oxydes, oxycarbures ou oxynitrures de magnésium Mg, de calcium Ca, d'Ytrium Y, de titane Ti, de zirconium Zr, d'hafnium Hf, de cérium Ce (CeO₂ ou Ce₂O₃), d'aluminium Al, de silicium Si, de zinc, de niobium, de tungstène, d'antimoine, de bismuth, de tantale ou d'étain Sn. Comme oxydes transparents , on peut aussi avoir recours à des oxydes métalliques dopés comme l'oxyde d'étain dopé au fluor SnO₂:F.

Parmi tous ces composés, on a avantage à choisir les oxydes qui présentent une valeur d'enthalpie libre standard de formation ΔG° par mole d'oxygène à haute température, notamment vers 500 à 600°C, qui soit inférieure ou égale à celle du métal dont est constituée la couche réfléchissante, en se reportant par exemple au diagramme mentionnant les enthalpies libres de formation des oxydes en fonction de la température, également connu sous le nom de diagramme d'Ellingham.Ainsi, thermodynamiquement, l'oxydation du métal de la couche réfléchissante n'est pas favorisée, et on limite donc ainsi au maximum tout risque d'oxydation ou de détérioration de la couche réfléchissante à chaud, lors de son dépôt qui, s'il est effectué sur le ruban de verre float, est réalisé effectivement aux alentours de 450 à 700°C.

Ainsi, quand la couche réfléchissante est choisie à base d'aluminium, il est avantageux de choisir comme couches complémentaires externe et/ou interne des couches d'oxydes d'aluminium, de zirconium, de magnésium ou de lanthane. Ces couches d'oxyde peuvent notamment être déposées par des techniques de pyrolyse en phase solide, liquide ou gazeuse. Si le dépôt s'effectue dans l'enceinte du bain float, il s'agira plutôt de pyrolyse en phase gazeuse CVD. Hors enceinte float, on peut avoir recours à des techniques de CVD, de pyrolyse en phase solide ou liquide. Ainsi, on peut déposer par CVD des couches d'oxyde tels que l'oxyde ou l'oxycarbure de silicium à partir de précurseurs gazeux de type silane et éthylène, comme décrit dans le brevet EP-0 518 755. Les couches de TiO₂ peuvent être déposées par CVD à partir d'un alcoolate tel que le tétra-isopropylate de titane, et l'oxyde d'étain, toujours par CVD à partir de monobutyltrichlorure d'étain ou de dibutyldiacétate d'étain. Les couches d'oxyde d'aluminium peuvent être déposées par pyrolyse en phase liquide ou gazeuse à partir de précurseurs organo-métalliques tels que l'acétylacétonate ou l'hexafluoroacétonate d'aluminium.

Les couches complémentaires transparentes peuvent aussi être choisies à base de nitrure ou de mélange de nitrures d'au moins un des éléments du groupe 3a du tableau de classement périodique, tels que le nitrure d'aluminium AIN, de gallium GaNₓ ou de bore BNₓ. On peut déposer les couches d'AlN par exemple par CVD, de manière connue, à partir de précurseurs alkyl ou hydrure d'aluminium associés à des précurseurs azotés type ammoniac et/ou amine. En tant que nitrure transparent peut aussi être utilisé le nitrure de silicium Si₃N₄. Le nitrure de silicium Si₃N₄ est en effet également un matériau très efficace pour protéger la couche réfléchissante de l'oxydation. Il peut être déposé par CVD à partir de silane et d'ammoniac et/ou d'amine.

Au moins une des couches complémentaires, et plus particulièrement la couche externe, peut également être choisie à base d'un matériau transparent du type diamant ou « Diamond-like Carbon » (DLC), ce type de matériau présentant une dureté élevée et protégeant ainsi très efficacement l'empilement de couches sous-jacent des abrasions mécaniques si cela s'avère nécessaire (c'est également vrai, dans une moindre mesure, pour l'oxyde de titane).

L'une au moins des couches complémentaires « interne » et « externe » peut également être choisie non pas à base de matériaux transparents dans le visible, mais au contraire à base de matériau(x) plus ou moins absorbant(s) dans le visible, différent(s) de ceux pouvant par ailleurs constituer la couche réfléchissante. De manière à ce qu'elles n'interfèrent pas ou quasiment pas optiquement, comme c'est le cas des matériaux transparents pré-listés, on préfère alors cantonner ce type de couches complémentaires à des épaisseurs faibles, notamment inférieures ou égales à 10 nm, notamment de l'ordre de 1 à 8 nm. Il peut s'agir de nitrures de métal de transition tels que le nitrure de tungstène W, de zirconium Zr, d'hafnium Hf, de niobium Nb, de titane Ti ou encore le nitrure de carbone. Il peut aussi s'agir de matériaux semiconducteurs tels que le silicium.

On choisit alors les matériaux en fonction de leur affinité par rapport au verre et/ou du matériau de la couche réfléchissante et de leur inertie chimique vis-à-vis de cette dernière. Ainsi, il peut être intéressant de choisir une fine couche interne en Si quand la couche réfléchissante est en métal, ce matériau étant une barrière efficace à la diffusion des alcalins et de l'oxygène provenant du verre, et, en outre pouvant jouer le rôle de promoteur d'adhérence verre/métal. Le silicium peut être déposé par CVD à partir de SiH₄.

Au moins une des couches complémentaires peut également présenter un gradient de composition chimique dans son épaisseur, ce qui permet très avantageusement de conférer une double propriété à une couche unique.

Il peut ainsi s'agir d'une couche complémentaire « interne » à base de SiO₂ ou SiOₓC_{y} s'enrichissant progressivement en silicium, ou à base de SiO₂ ou SiOₓC_{y} s'enrichissant progressivement en oxyde du métal de la couche réfléchissante tel que Al₂O₃ si la couche réfléchissante est en aluminium. On optimise ainsi le rôle de promoteur d'adhérence et de réducteur de contraintes mécaniques de la couche interne, avec une affinité améliorée de cette dernière à la fois à son interface avec le verre et à son interface avec la couche réfléchissante.

La couche complémentaire externe peut également présenter un gradient de composition chimique à base d'oxyde du métal de la couche réfléchissante tel qu'Al₂O₃ ou à base de SiOₓC_{y}, s'enrichissant progressivement en oxyde de titane, l'oxyde de type Al₂O₃ présentant une bonne affinité et une haute inertie chimique vis-à-vis de l'aluminium lorsque c'est ce type de matériau qui constitue la couche réfléchissante, le TiO₂ quant à lui pouvant améliorer la durabilité mécanique de l'empilement et éventuellement lui conférer des propriétés anti-buées/anti-salissures intéressantes, comme cela est décrit dans le brevet FR95/10839 déposé le 15 septembre 1995.

On peut obtenir ces gradients de composition chimique par pyrolyse en phase gazeuse, en utilisant une buse de distribution utilisant deux fentes d'injection, une pour chacun des précurseurs gazeux nécessaire à l'obtention des deux matériaux, et en la configurant de manière à provoquer, le long du verre, un mélange partiel et progressif entre les deux veines gazeuses issues de deux fentes d'injection, comme cela est par exemple décrit dans la demande PCT/FR96/01073 déposée le 10 juillet 1996.

Les couches complémentaires internes et externes ont généralement des épaisseurs géométriques comprises entre 1 et 200 nm, notamment entre 30 et 160 nm si elles sont transparentes et entre 1 et 5 nm si elles sont absorbantes.

En fait, les épaisseurs des couches complémentaires sont à moduler en fonction de nombreux paramètres, dont la nature même de ces couches, celle de la couche réfléchissante, et le type d'agressions que l'empilement de couches aura à subir. Ainsi, il est préférable que la couche réfléchissante soit «isolée» chimiquement, à l'aide à la fois d'une couche complémentaire interne et d'une couche complémentaire externe, pour préserver ses propriétés lors de son dépôt à chaud. En outre, si le substrat verrier doit ensuite subir des traitements thermiques du type recuit, bombage ou trempe, ces couches rempliront à nouveau leur rôle de protection, et dans ce dernier cas, il peut être avantageux de les prévoir plus épaisses que dans le cas où le substrat n'a pas à subir ce type de traitement post-dépôt.

Des modes de réalisation de l'empilement de couches selon l'invention peuvent être les suivants :
TiN ou AlN/Al/AlN
AlN/Al/SiOₓC_{y}
Al/SiOₓC_{y}
SiOₓC_{y}/Al/SiOₓC_{y}
Si/Al/SiOₓC_{y}

L'invention prévoit aussi l'application d'un substrat verrier tel que précédemment décrit et dont la couche externe est en TiO₂ (ou s'achève par du TiO₂ en cas de couche à gradient de composition) à la réalisation d'un vitrage ou d'un miroir anti-salissures et/ou anti-buée ; de même que l'application de ce substrat dont la couche complémentaire externe est plus dure que la couche réfléchissante et notamment à base de diamant ou de « diamond like carbon », à la réalisation de miroirs anti-abrasion.

Il est également prévu d'appliquer le substrat verrier de l'invention à la réalisation d'un vitrage chauffant grâce au passage de courant dans la couche réfléchissante, d'épaisseur adaptée.

De manière plus générale, le substrat verrier revêtu selon l'invention a des applications très diverses, et peut être utilisé dans des miroirs réfléchissants ou semi-réfléchissants, dont les miroirs de fond de cellule photovoltaïque, les miroirs de fond de bassin et les miroirs de photocopieuse, des vitrages de protection solaire pour bâtiment ou tout véhicule (du type bas-émissif ou anti-solaire), les vitrages anti-rayonnements électromagnétiques (ondes radar, ou ondes radio), les rétroviseurs, les éléments verriers d'ameublement, les parois d'habitacle du type aquarium ou piscine, en tant que cloisons intérieures, verre décoratif. Le substrat selon l'invention peut aussi être utilisé en employant la couche réfléchissante en tant qu'électrode conductrice par exemple dans les vitrages électrochimiquement actifs tels que les vitrages électrochromes, viologènes, les vitrages à cristaux liquides ou à valve optique.

L'invention vise également le procédé de fabrication de l'empilement de couches dont est revêtu le substrat verrier, notamment par dépôt à chaud de la couche réfléchissante à partir de métal en poudre fondu selon le procédé « D.P.M. » précédemment mentionné, par évaporation ou par CVD selon sa nature. La ou les couches complémentaires sont déposées de préférence par dépôt pyrolytique en phase gazeuse, liquide ou solide.

Le mode de fabrication préféré consiste à déposer l'ensemble des couches à chaud, sur le ruban d'un verre float, en déposant de préférence au moins les deux premières couches dans l'enceinte du bain float. Ainsi, les dépôts s'effectuent en continu avec un gain en termes de temps et de coût de production significatif par rapport aux techniques de dépôt en reprise du type pulvérisation cathodique, sol-gel ou immersion dans un bain d'argenture, avec en outre la solidité et l'adhérence au substrat caractéristiques des couches déposées à température élevée.

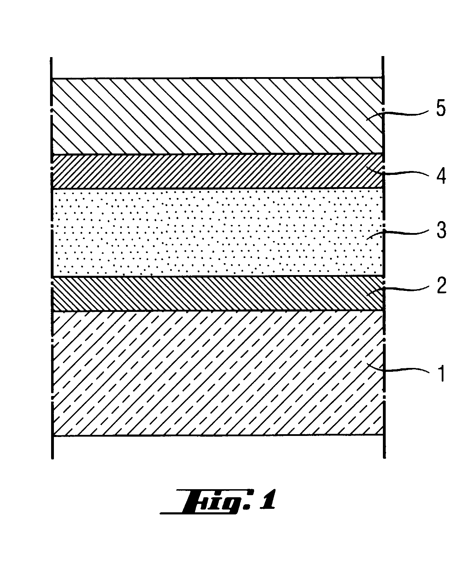

D'autres détails et caractéristiques avantageuses ressortent de la description ci-après d'exemples de réalisation non limitatifs à l'aide de la figure suivante :
□ **figure 1** : une coupe transversale d'un substrat verrier revêtu selon l'invention,

On précise que la figure 1 est une représentation très schématique ne respectant pas scrupuleusement les proportions entre les divers matériaux représentés, ceci afin de faciliter sa lecture.

Les exemples suivants sont réalisés sur un ruban de verre float de 4 mm d'épaisseur, verre silico-sodo-calcique clair qui, une fois découpé, est commercialisé par la société SAINT-GOBAIN VITRAGE sous le nom de Planilux.

Il pourrait tout aussi bien s'agir de verre extra-clair ou de verre teinté dans la masse, comme le verre qui, une fois découpé, sont commercialisés par la société SAINT-GOBAIN VITRAGE, respectivement sous le nom de Diamant et sous le nom de Parsol.

Après découpe, on obtient, comme cela est représenté en figure 1, des substrats verriers munis d'un empilement de couches de la façon suivante : le substrat 1 est revêtu d'une première couche complémentaire 2 dite interne, elle-même recouverte par la couche réfléchissante 3, sur laquelle est disposée une seconde couche complémentaire 4 dite externe.

Dans tous les exemples, la couche réfléchissante 3 est en aluminium, et est déposée sur le ruban de verre par le procédé selon la demande PCT/FR96/00362 ou la demande PCT/FR97/00394, consistant, brièvement, à projeter à la surface du verre un hydrure d'aluminium tel que AlH₃(N(C₂H₅)(CH₃)₂) ou un alkyl d'aluminium tel que AlR₃, avec R des radicaux alkyls ayant de 1 à 5 carbones, en phase gazeuse dans une cavité à gradient de température de façon à ce que l'hydrure ou l'alkyl se décompose en poudre d'aluminium avant d'atteindre la surface du verre qui est à environ 650 à 700°C, dans l'enceinte du bain float. Les particules fondent et coalescent en couche continue sur le verre, qui se solidifie au fur et à mesure que la température du verre se rapproche de la température de fusion de l'aluminium.

Dans le cadre des exemples qui suivent, toutes les couches sont déposées dans l'enceinte float, les couches 2 interne et 4 externe étant déposées par CVD, c'est-à-dire dans une atmosphère rigoureusement non oxydante et quand le verre est à une température s'échelonnant entre environ 750-700°C pour le dépôt de la première couche 2 à au moins 580-590°C pour le dépôt de la couche 4 de l'empilement, le ruban de verre « sortant » habituellement de l'enceinte du bain float à une température d'environ 590°C.

On se reportera au début du présent texte pour connaître le type de précurseurs utilisables pour déposer par CVD les couches 2 et 4.

Les exemples 1 à 6 suivants concernent des substrats verriers à fonction miroir.

### EXEMPLE 1

A l'aide des techniques précédemment détaillées, on dépose à la surface du ruban de verre la séquence de couches suivantes (les épaisseurs géométriques sont précisées sous chacune des couches, exprimées en nanomètres) :

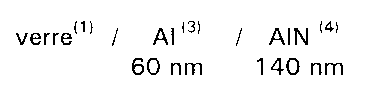

L'indice de réfraction du nitrure d'aluminium est de 1,8.
Ce type de substrat revêtu peut être utilisé en miroir « face 1 » ou en miroir « face 2 ». Il est de préférence utilisé en tant que miroir « face 1 ».

### EXEMPLE 2

La séquence est la suivante :

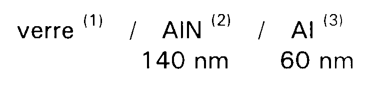

L'indice de réfraction du nitrure est de 1,8.
Ce type de substrat est de préférence utilisé en tant que miroir « face 2 ».

### EXEMPLE 3

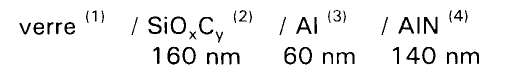

L'indice de la couche en SiOₓC_{y} est ici réglé à environ 1,65 et celui de la couche en AIN est de 1,8.
On peut utiliser ce substrat en miroir « face 1 » ou « face 2 ».

### EXEMPLE 4

La séquence est cette fois la suivante :

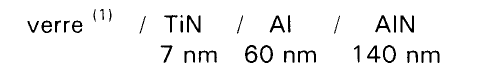

L'indice du nitrure d'aluminium est d'environ 1,8.
On peut utiliser ce substrat en miroir « face 1 » ou « face 2».

### EXEMPLE 5

La séquence est la suivante :

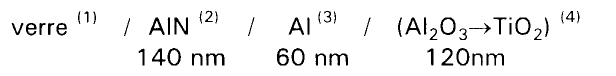

La couche d'AIN a toujours un indice de réfraction d'environ 1,8, la dernière couche 4 est une couche à gradient de composition chimique, avec de l'alumine qui est substituée progressivement par de l'oxyde de titane.
On peut utiliser ce substrat en miroir « face 1 » ou « face 2».

### EXEMPLE 6

La séquence est la suivante :

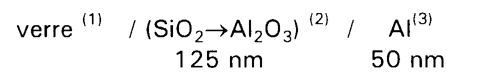

On utilise ce substrat en tant que miroir « face 2 ».

Pour les utilisations en miroirs « face 2 » de substrats selon les exemples précédents, on prévoit de recouvrir l'empilement de couches d'un émail ou d'une laque protectrice et opacifiante. La laque est notamment à base d'un polymère thermodurcissable du type époxyde, polyester, polyuréthane, acrylique, déposé par voie liquide, ou encore par voie solide comme cela est décrit dans le brevet FR-B-2 718 733.

Le ruban de verre est ensuite, dans chacun des 6 exemples, découpé puis l'on mesure sur chacun des 6 plateaux de verre la valeur de réflexion lumineuse R_{L} « côté couches » des substrats en pourcentage selon l'illuminant D₆₅ ainsi que la longueur d'onde dominante en réflexion λ dom (R_{L}) en nm et la pureté en réflexion p(R) en pourcentage. Sont également mesurées les valeurs R'_{L} de réflexion lumineuse côté « substrat non revêtu », ainsi que les longueurs d'onde dominante λ dom (R') et de pureté p(R') qui leurs sont associées. On obtient les résultats regroupés dans le tableau 1 ci-dessous :

**TABLEAU 1**

| **EXEMPLES** | **1** | **2** | **3** | **4** | **5** | **6** |
|---|---|---|---|---|---|---|
| R_{L} | 92 | - | 92 | 91 | 94 | - |
| λ dom (R) | 557 | - | 558 | 557 | 553 | - |
| p(R) | 1,0 | - | 1,0 | 1 | 0,6 | - |
| R'_{L} | 84 | 84 | 84 | 82 | 84 | 83 |
| λ dom (R') | 498 | 506 | 504 | 534 | 506 | 498 |
| p(R') | 1,1 | 1,0 | 0,9 | 0,9 | 1,0 | 1,1 |

Les exemples 7 à 8 qui suivent concernent le substrat de l'invention destiné à faire partie d'un vitrage de protection solaire :

### EXEMPLE 7

La séquence est la suivante :

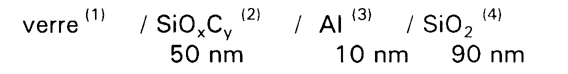

L'indice de la première couche en SiOₓC_{y} est de 1,65 et celui de la dernière couche en SiO₂ est de 1,48. (L'indice de la première couche en SiOₓC_{y} peut être en fait réglé dans la plage 1,60 à 1,85).

### EXEMPLE 8

La séquence est la suivante :

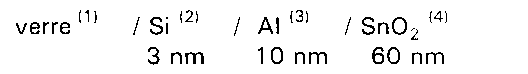

L'indice de réfraction de l'oxyde d'étain est d'environ 1,9 à 2,0.

Après découpe, on mesure sur les substrats conformément à ces deux exemples les valeurs de transmission lumineuse T_{L} en pourcentage, de réflexion lumineuse côté couches R_{L} et côté verre R'_{L} également en pourcentages selon l'illuminant D₆₅. Les résultats sont regroupés dans le tableau 2 ci-dessous :

**TABLEAU 2**

| **EXEMPLE** | **T**_{**L**} | **R**_{**L**} | **R'**_{**L**} |
|---|---|---|---|
| 7 | 21,9 | 52,4 | 56,0 |
| 8 | 29,3 | 29,8 | 48,5 |

De l'ensemble de ces données peuvent être tirées les conclusions suivantes : avec des couches réfléchissantes en aluminium d'épaisseur suffisante conformes aux exemples 1 à 6, on obtient des miroirs à R_{L} d'environ 91 ou 92%, soit des valeurs de R_{L} analogues à celles que l'on obtient à ce jour avec des miroirs usuels fabriqués en reprise. Les couches complémentaires qui lui sont associées n'interfèrent pas ou très peu sur l'aspect optique du vitrage ou du miroir : on peut moduler leur épaisseur, en fonction de leur nature, (transparents comme SiO₂ ou AIN, plus ou moins absorbants comme TiN ou Si) ainsi qu'en fonction du fait si le verre revêtu doit ensuite ou non subir un post-traitement thermique. Dans ce cas, il peut aussi être préférable, comme c'est le cas de l'exemple 5, de prévoir à la fois une couche interne et externe qui, de surcroît, présentent des épaisseurs géométriques significatives, d'au moins 80 nm. Si ce n'est pas le cas, et si l'empilement de couches est par exemple destiné à être protégé du contact avec un milieu extérieur agressif (par exemple en tant que miroir « face 2 » protégé par une laque opacifiante), des couches complémentaires plus minces peuvent suffire.

En dernier lieu, la séquence selon l'exemple 5 s'achevant par du TiO₂ quasiment pur présente une propriété anti-salissure/anti-buée intéressante de préférence en déposant la couche de manière à ce que le TiO₂ se trouve au moins partiellement sous forme cristalisée comprenant une phase anatase et/ou rutile.

## Revendications

1. Substrat verrier (1) muni d'une couche (3) réfléchissante au moins dans les longueurs d'onde appartenant au domaine du visible, couche déposée à chaud, notamment en continu sur un ruban de verre float dont est issu ledit substrat (1), ***caractérisé en ce que*** la couche (3) réfléchissante est à base d'un matériau « à caractère métallique » et/ou à base d'un matériau « à caractère semi-conducteur » ***et en ce que*** le substrat (1) est également muni d'une couche complémentaire « externe » (4) et/ou d'une couche complémentaire interne (2) par rapport à ladite couche réfléchissante (3) et destinée(s) à assurer sa durabilité chimique et/ou mécanique.

2. Substrat verrier (1) selon la revendication 1, ***caractérisé en ce que*** la couche (3) réfléchissante est à base d'au moins un des composés comprenant Al, Zn, Sn, Ag, Au, In, Rh, Cd, TiN, ZrN, HfN.

3. Substrat verrier (1) selon la revendication 1 ou la revendication 2, notamment à fonction de miroir, ***caractérisé en ce que*** la couche (3) réfléchissante a une épaisseur géométrique supérieure ou égale à 40nm, notamment supérieure ou égale à 50nm, notamment comprise entre 50 et 80nm.

4. Substrat verrier (1) selon la revendication 1 ou la revendication 2, notamment à fonction de protection solaire, ***caractérisé en ce que*** la couche (3) réfléchissante a une épaisseur géométrique inférieure à 50 nm, notamment comprise entre 5 et 35 nm.

5. Substrat verrier (1) selon l'une des revendications précédentes, ***caractérisé en ce que*** la couche complémentaire « interne » (2) et/ou la couche complémentaire « externe » (4) sont à base de matériau(x) transparent(s) dans les longueurs d'onde appartenant au domaine du visible et du type oxyde(s) choisi(s) parmi l'un au moins des composés comprenant les oxydes, oxycarbures ou oxynitrures des éléments du groupe 2a, 3b, 4b, 3a, 4a et des lanthanides du tableau de classement périodique, tels que les oxydes de Mg, Ca, Y, Ti, Zr, Hf, Ce, Al, Si, Sn, Zn, Nb, W, Sb, Bi, Ta ou encore à base d'oxydes métalliques dopés transparents tels que SnO₂:F.

6. Substrat verrier (1) selon l'une des revendications 1 à 4, ***caractérisé en ce que*** la couche complémentaire « interne» (2) et/ou la couche complémentaire « externe » (4) sont à base de matériau(x) transparent(s) dans les longueurs d'onde appartenant au domaine du visible et du type nitrure(s), notamment à base de nitrure d'au moins un des éléments du groupe 3a du tableau de classement périodique, tels que le nitrure d'AI, de Ga ou de bore, ou encore à base de nitrure de silicium.

7. Substrat verrier (1) selon l'une des revendications 1 à 4, ***caractérisé en ce que*** la couche complémentaire « interne » (2) et/ou la couche couche complémentaire « externe » (4) sont à base de matériau(x) transparent(s) dans des longueurs d'onde appartenant au domaine du visible du type diamant ou « carbon-like diamond ».

8. Substrat verrier (1) selon l'une des revendications 1 à 4, ***caractérisé en ce que*** la couche complémentaire « interne » (2) et/ou la couche complémentaire « externe » (4) sont à base de matériau(x) absorbant(s) dans des longueurs d'onde appartenant au domaine du visible et différents de ceux constituant la couche réfléchissante (3), de type nitrure de métal de transition tels que nitrure de W, de Zr, de Hf, de Nb, de Ti ou le nitrure de carbone, ou encore en silicium Si, de préférence cantonnées à des épaisseurs géométriques inférieures ou égales à 10 nm, notamment de l'ordre de 1 à 8 nm.

9. Substrat verrier (1) selon l'une des revendications 1 à 4, ***caractérisé en ce que*** la couche complémentaire « interne» (2) et/ou la couche complémentaire « externe » (4) présente un gradient de composition chimique dans son épaisseur, notamment une couche complémentaire « interne » (2) à base de SiO₂ ou SiOₓC_{y} s'enrichissant progressivement en silicium ou à base de SiO₂ ou SiOₓC_{y} s'enrichissant progressivement en Al₂O₃, et/ou une couche complémentaire « externe » (4) à base d'Al₂O₃ ou de SiOₓC_{y} ou de SiO₂ s'enrichissant progressivement en TiO₂, ou à base de Si s'enrichissant progressivement en SiOₓC_{y} ou en SiO₂.

10. Substrat verrier (1) selon l'une des revendications 5, 6 ou 7, ***caractérisé en ce que*** l'épaisseur géométrique des couches complémentaires « interne » (2) et « externe » (4) est comprise entre 1 et 200 nm, notamment entre 30 et 160 nm.

11. Substrat verrier (1) selon l'une des revendications précédentes, ***caractérisé en ce que*** la couche réfléchissante (3) se trouve entre une couche complémentaire « interne » (2) et une couche complémentaire « externe » (4) de natures et d'épaisseurs choisies afin de préserver les propriétés de la couche réfléchissante (3) lors de son dépôt à chaud, et éventuellement ultérieurement au cas où le substrat verrier (1) est destiné à subir après dépôt des couches un post-traitement thermique du type recuit, bombage ou trempe.

12. Substrat verrier (1) selon l'une des revendication précédentes, ***caractérisé en ce qu'***il est muni de l'empilement de couches TiN ou AlN⁽²⁾/Al⁽³⁾/AlN⁽⁴⁾ ou AlN⁽²⁾/Al⁽³⁾/SiOₓC_{y}⁽⁴⁾ ou Al⁽³⁾ /SiOₓC_{y}⁽⁴⁾ ou SiOₓC_{y}⁽²⁾/Al⁽³⁾/SiOₓC_{y}⁽⁴⁾ ou Si⁽²⁾/Al⁽³⁾/SiOₓC_{y}⁽⁴⁾.

13. Substrat verrier (1) selon l'une des revendications précédentes, ***caractérisé en ce que*** l'empilement de couches (2, 3, 4) dont il est muni, est recouvert d'un revêtement protecteur et/ou opacifiant, notamment du type couche d'émail ou de laque à base de polymère(s).

14. Application du substrat verrier (1) selon l'une des revendications précédentes dont la couche complémentaire « externe » (4) est à base d'oxyde de titane, ou s'achève en TiO₂ dans le cas d'une couche à gradient de composition chimique, à la réalisation d'un vitrage ou d'un miroir anti-salissure et/ou anti-buée.

15. Application du substrat verrier (1) selon l'une des revendications 1 à 13 dont la couche complémentaire « externe » (4) est plus dure que la couche réfléchissante (3) et notamment à base de diamant ou de « diamond-like carbon », à la réalisation de miroirs anti-abrasion.

16. Application du substrat verrier (1) selon l'une des revendications 1 à 13 à la réalisation d'un vitrage chauffant grâce au passage de courant dans la couche réfléchissante (3).

17. Application du vitrage selon l'une des revendications 1 à 13 avec une couche réfléchissante d'épaisseur adaptée, à la réalisation d'un produit du groupe comprenant les miroirs réfléchissants ou semi-réfléchissants, les vitrages de protection solaire pour bâtiments ou véhicules, les vitrages anti-rayonnements électromagnétiques, les rétroviseurs, les éléments verriers d'ameublement, les parois d'habitacles du type aquarium ou piscine, cloisons intérieures.

18. Procédé de fabrication du substrat verrier (1) muni de couches (2, 3, 4) selon l'une des revendications 1 à 13, ***caractérisé en ce qu***'on dépose la couche réfléchissante (3) par dépôt à chaud sur le ruban de verre float, dans le cas d'une couche (3) en Al, Zn ou Cd par mise en contact de la surface du ruban de verre avec le métal en question sous forme pulvérulente ou sous forme fondue, dans le cas d'une couche (3) en Ag ou Au par évaporation du métal au-dessus du ruban de verre float, et dans le cas d'une couche (3) en Cr, TiN, ZrN, HfN ou Rh par dépôt pyrolytique en phase vapeur CVD.

19. Procédé de fabrication du substrat verrier (1) muni de couches (2, 3, 4) selon l'une des revendications 1 à 13, ***caractérisé en ce qu'***on dépose la ou les couches complémentaires (2, 4), à base d'oxyde ou de nitrure, par dépôt pyrolytique en phase vapeur CVD ou par pyrolyse en phase solide ou liquide.

20. Procédé de fabrication du substrat verrier (1) muni de couches (2, 3, 4) selon l'une des revendications 18 ou 19, ***caractérisé en ce que*** l'ensemble des couches (2, 3, 4) est déposé à chaud en continu sur le ruban de verre float, en déposant de préférence au moins les deux premières couches (2, 3) dans l'enceinte du bain float.
